# EUROPEAN PATENT APPLICATION

(11) **EP 4 047 723 A1**
(43) Date of publication of application: **24.08.2022**
(21) Application number: 21852895.8
(22) Date of filing: 30.07.2021
(51) Int. Cl.: H01M 50/109

(54) **BUTTON CELL AND PREPARATION METHOD THEREFOR**

(30) Priority: 04.08.2020 CN 202010771287
(71) Applicant: Zhuhai CosMX Battery Co., Ltd., Zhuhai, Guangdong 519180 (CN)
(72) Inventor: PENG, Ning, Zhuhai, Guangdong 519180 (CN)
(74) Representative: Elzaburu S.L.P.
(86) International application number: PCT/CN2021/109778
(87) International publication number: WO 2022/028331

(57) **Abstract**

The present invention provides a button cell and a preparation method thereof, the button cell includes a housing and a roll core; the housing includes a housing body and a top cover assembly, the housing body and the top cover assembly jointly enclose an accommodating cavity for accommodating the roll core; the roll core includes a first tab, and the first tab is welded to a bottom wall of the housing body by laser welding; and a welding area of the first tab has a welding mark, and the welding mark is located in a portion where the bottom wall of the housing body overlaps with the cavity of the roll core, and an outer surface of a welding area of the bottom wall is a smooth surface. The button cell of the present invention is not only beneficial to ensuring the quality and performance of the button cell, but also beneficial to ensuring the electrical connection effect between the button cell and an electronic product.

## Description

The present application claims priority to Chinese Patent Application No. 202010771287.3 filed with China National Intellectual Property Administration on August 04, 2020 and titled "BUTTON CELL AND PREPARATION METHOD THEREOF", which is incorporated herein by reference in its entirety.

### □ TECHNICAL FIELD

The present invention relates to the technical field of lithium batteries and, in particular, to a button cell and a preparation method thereof.

### BACKGROUND

Button cells, which are cells that are shaped like a button, generally have a large a diameter and a thin thickness. The button cells are divided into two categories: chemical cells and physical cells, where the chemical cells are the most widely used, and are mainly composed of an anode, a cathode and an electrolyte thereof.

Due to their small size, the button cells have been widely used in various small and miniature electronic products, for example, computer main boards, earphones, electronic watches, electronic dictionaries, electronic scales, remote controls, electric toys, cardiac pacemakers, electronic hearing aids, counters, cameras, etc. In order to ensure the quality and performance of products equipped with the button cells, the quality and performance of the button cells have also received more and more attentions.

However, in a process of manufacturing the existing button cells, on one hand, a housing body is prone to deformation, which affects the quality and performance of the button cells; on the other hand, a welding bump may be formed on an outer surface of the housing body, which affect the electrical connection effect between the button cells and the electrical products.

### SUMMARY

The present invention provides a button cell and a preparation method thereof, and in the process of manufacturing the button cell of the present invention, a housing is not easily deformed, thereby beneficial to ensuring the quality and performance of the button cell; at the same time, no welding bump would be formed on an outer surface of a housing body, thereby beneficial to ensuring the electrical connection effect between the button cell and an electronic product.

In a first aspect, the present invention provides a button cell including a housing and a roll core; the housing includes a housing body and a top cover assembly, where the housing body includes a bottom wall and a side enclosure wall provided along an outer edge of the bottom wall and extending upward, the top cover assembly is covered on a top of the side enclosure wall and sealed with the side enclosure wall, the housing body and the top cover assembly jointly enclose an accommodating cavity for accommodating the roll core;

The roll core includes a positive sheet and a negative sheet, a cavity is formed in a center of the roll core, the positive sheet or the negative sheet is provided with a first tab extending toward a direction of the bottom wall, and the first tab is welded to the bottom wall of the housing body by laser welding;
a welding area of the first tab has a welding mark, and the welding mark is located in a portion where the bottom wall overlaps with the cavity, an outer surface of a welding area of the bottom wall is a smooth surface.

The button cell of the present invention includes the housing and the roll core, the housing includes the housing body and the top cover assembly, and the housing body and the top cover assembly jointly enclose the accommodating cavity for accommodating the roll core, the roll core can output electric energy to outside through the housing or receive electric energy inputted from outside through the housing. The roll core includes the first tab, and the first tab is welded to the bottom wall of the housing body by laser welding. In this way, on one hand, compared with a resistance welding that involves contact pressure welding, laser welding does not need to directly contact the laser welding equipment with the first tab, and only needs to irradiate the laser emitted by the laser welding equipment onto the first tab, to achieve the purpose of welding the first tab with the bottom wall of the housing body, so that the deformation of the housing body caused by the contact pressure welding can be avoided, which is not only beneficial to ensuring the quality and performance of the button cell, but also beneficial to improving the yield of the button cell.

On the other hand, after the laser welding is completed, the welding mark may only be formed on the welding area of the first tab, while the outer surface of the welding area of the bottom wall of the housing body is a smooth surface, that is, after the button cell is assembled into the electronic product, the smooth surface of the housing body of the button cell can maintain a good contact with a conductive area of the electronic product, which is beneficial to ensuring the electrical connection effect between the button cell and the electronic product, and thus beneficial to improving the energy transfer efficiency between the button cell and the electronic product.

In the button cell as described above, optionally, a distance from the top of the side enclosure wall to the welding mark is greater than a length from an end point of the first tab out of the roll core to the tab of the welding mark.

In the button cell as described above, optionally, the welding mark includes a spot-like welding mark.

In the button cell as described above, optionally, an edge of the spot-like welding mark is circular.

In the button cell as described above, optionally, a diameter of the spot-like welding mark is not less than 50 µm.

In the button cell as described above, optionally, the number of the spot-like welding mark is not less than 2.

In the button cell as described above, optionally, the top cover assembly includes an upper cover and a top cover, the upper cover extends from the top of the side enclosure wall towards a direction of a central axis of the housing body, the upper cover is provided with a center hole surrounding the central axis, and the top cover is covered on the center hole and is sealed with the upper cover.

In a second aspect, the present invention provides a preparation method of a button cell including:
providing a housing, where the housing includes a housing body and a top cover assembly, the housing body includes a bottom wall and a side enclosure wall provided along an outer edge of the bottom wall and extending upward;
providing a roll core, where the roll core includes a positive sheet and a negative sheet, a cavity is formed in a center of the roll core, and the positive sheet or the negative sheet is provided with a first tab;
placing the roll core into the housing body, making the first tab of the roll core extend toward a direction of the bottom wall of the housing body and attached to the bottom wall;
welding the first tab to the bottom wall using a laser welding equipment, where a laser of the laser welding equipment passes through the cavity;
welding a second tab of the roll core to an inner side of the top cover assembly; and
covering the top cover assembly on a top of the side enclosure wall and sealing it with the side enclosure wall.

In the preparation method of the button cell in the present invention, the first tab is welded to the bottom wall of the housing body by using the laser welding equipment. In this way, on one hand, compared with the resistance welding that involves contact pressure welding, laser welding does not need to directly contact the laser welding equipment with the first tab, and only needs to irradiate the laser emitted by the laser welding equipment onto the first tab, to achieve the purpose of welding the first tab with the bottom wall of the housing body, so that the deformation of the housing body caused by the contact pressure welding can be avoided, which not only is beneficial to ensuring the quality and performance of the button cell, but also beneficial to improving the yield of the button cell.

On the other hand, after the laser welding is completed, the welding mark is only formed on a welding area of the first tab, while an outer surface of a welding area of the bottom wall of the housing body is a smooth surface, that is, after the button cell is assembled into the electronic product, the smooth surface of the housing body of the button cell can maintain a good contact with a conductive area of the electronic product, which is beneficial to ensuring the electrical connection effect between the button cell and the electronic product, and thus beneficial to improving the energy transfer efficiency between the button cell and the electronic product.

In the preparation method of the button cell as described above, optionally, welding the first tab to the bottom wall using the laser welding equipment includes:
inserting a hollow pipe into the cavity of the roll core, and pressing the first tab against the bottom wall by the hollow pipe, the first tab being at least partly exposed to an inner cavity of the hollow pipe; making a laser emitted by the laser welding equipment pass through the inner cavity of the hollow pipe, to weld the first tab to the bottom wall of the housing body.

In the preparation method of the button cell as described above, optionally, a height of the hollow pipe is greater than a height of the roll core.

In the preparation method of the button cell as described above, optionally, the height of the hollow pipe is greater than 5mm.

In the preparation method of the button cell as described above, optionally, an outer diameter of the hollow pipe is between 1 mm and 3 mm; and/or an inner diameter of the hollow pipe is between 0.5 mm and 2.8 mm; and/or a wall thickness of the hollow pipe is between 0.05 mm and 0.5 mm.

In the preparation method of the button cell as described above, optionally, the hollow pipe is a metal hollow pipe.

In the preparation method of the button cell as described above, optionally, the laser welding equipment welds the first tab to the bottom wall of the housing body by pulse spotting.

In the preparation method of the button cell as described above, optionally, welding the second tab of the roll core to the inner side of the top cover assembly includes:
cutting the second tab to a preset length; attaching an insulation rubber ring to a side of the top cover assembly facing the roll core, the insulation rubber ring being coaxially arranged with the top cover; and welding the second tab to a portion of the top cover in an inner side of the insulation rubber ring.

In the preparation method of the button cell as described above, optionally, the second tab is welded to the top cover by laser pulse spotting.

In the preparation method of the button cell as described above, optionally, the top cover assembly includes an upper cover and a top cover, and a center hole is provided in a center of the upper cover; and
covering the top cover assembly on the top of the side enclosure wall and sealing it with the side enclosure wall includes:
covering the top cover on the center hole of the upper cover and insulatively sealing it with the upper cover; and
covering the upper cover on the top of the side enclosure wall and welding it with the side enclosure wall together.

In a third aspect, the present invention provides an electronic product, including the button cell as described in any one of the above items.

The electronic product of the present invention includes a button cell, the button cell includes a housing and a roll core, the housing includes a housing body and a top cover assembly, and the housing body and the top cover assembly jointly enclose an accommodating cavity for accommodating the roll core, the roll core can output electric energy to outside through the housing or receive electric energy inputted from outside through the housing. The roll core includes a first tab, and the first tab is welded to the bottom wall of the housing body by laser welding. In this way, on one hand, compared with a resistance welding that involves contact pressure welding, laser welding does not need to directly contact the laser welding equipment with the first tab, and only needs to irradiate the laser emitted by the laser welding equipment onto the first tab, to achieve the purpose of welding the first tab with the bottom wall of the housing body, so that a deformation of the housing body caused by the contact pressure welding can be avoided, which is not only beneficial to ensuring the quality and performance of the button cell, but also beneficial to improving the yield of the button cell.

On the other hand, after the laser welding is completed, a welding mark is only be formed on a welding area of the first tab, while an outer surface of a welding area of the bottom wall of the housing body is a smooth surface, that is, after the button cell is assembled into the electronic product, the smooth surface of the housing body of the button cell can maintain a good contact with a conductive area of the electronic product, which is beneficial to ensuring the electrical connection effect between the button cell and the electronic product, and thus beneficial to improving the energy transfer efficiency between the button cell and the electronic product.

### □ BRIEF DESCRIPTION OF DRAWINGS

In order to more clearly illustrate technical solutions of embodiments of the present invention or the prior art, drawings that need to be used in the description of the embodiments or the prior art will be briefly introduced below. Obviously, the drawings in the following description are some of embodiments of the present invention, and for those of ordinary skill in the art, other drawings may also be obtained from these drawings without any creative work.
FIG. 1 is a cross-sectional view of a button cell provided by Embodiment 1 of the present invention.
FIG. 2 is a top view of the button cell after removing a top cover as provided by Embodiment 1 of the present invention.
FIG. 3 is a schematic diagram of a process of loading a roll core into a housing body as provided by Embodiment 2 of the present invention.
FIG. 4 is a schematic diagram of a process of a hollow pipe extending into a cavity of the roll core as provided by Embodiment 2 of the present invention;
FIG. 5 is a cross-sectional view of the hollow pipe located in the cavity of the roll core as provided by Embodiment 2 of the present invention.
FIG. 6 is a schematic structural diagram of cutting a second tab provided by Embodiment 2 of the present invention.
FIG. 7 is a schematic diagram of a process of gluing the top cover provided by Embodiment 2 of the present invention.
FIG. 8 is a schematic structural diagram of the second tab welded to the top cover as provided by Embodiment 2 of the present invention.
FIG. 9 is a schematic structural diagram of the top cover welded to the housing body as provided by Embodiment 2 of the present invention.

Description of reference numbers:
10-housing;
110-top cover assembly;
111-upper cover;
112-top cover;
1121-injection hole;
113-insulation rubber ring;
120-housing body;
121-bottom wall;
20-roll core;
210-first tab;
211-welding mark;
220-second tab;
230-cavity;
30-hollow pipe; and
310-inner cavity.

### □ DETAILED DESCRIPTION

Button cell, which is also known as button battery, refers to a battery that is shaped like a small button. Compared with a cylindrical battery, the button cell has a larger diameter and a thinner thickness. Due to the small size, the button cell has been widely used in various micro-electronic products, for example, computer main boards, electronic watches, electronic dictionaries, electronic scales, remote controls, electric toys, cardiac pacemakers, electronic hearing aids, counters, cameras, etc.

The button cell is mainly composed of a housing and a roll core located in the housing. The housing includes a housing body and a top cover assembly, where the housing body includes a bottom wall and a side enclosure wall that surrounds an outer edge of the bottom wall and extends upwards, and the top cover assembly is covered on the top of the side enclosure wall and sealed with the side enclosure wall, so that an accommodating cavity for accommodating the roll core is defined between the top cover assembly and the housing body.

The top cover assembly includes an upper cover provided with a center hole and a top cover covered at the center hole, in other words, the upper cover extends from the top of the side enclosure wall towards a direction of the central axis of the housing body, and the upper cover is provided with the center hole surrounding the central axis of the housing body, the top cover is covered on the center hole, and the top cover and the upper cover are sealed between. In some implementations, the top cover and the upper cover are welded together, so as to have the same electrical polarity, and the upper cover is insulatively sealed with the side enclosure wall through an insulation seal; in some other implementations, the upper cover and the side enclosure wall are welded together, and the top cover is insulatively sealed with the upper cover through an insulation seal, so that the top cover and the upper cover have opposite electrical polarities.

The roll core is mainly formed by winding a positive sheet, a first diaphragm, a negative sheet and a second diaphragm arranged in a laminated manner, and a cavity at least partially overlapping with the center hole is formed in the center of the roll core.

The accommodating cavity is also filled with an electrolyte, and the positive sheet is provided with a positive tab, the negative sheet is provided with a negative tab, one of the two tabs is welded to the bottom wall of the housing body, and the other is welded to the top cover.

In the process of manufacturing the button cell, there are two main operation methods for welding the tab of the roll core to the bottom wall of the housing body: a first operation method that is to first weld the tab to the housing, and then place the roll core into the housing body; and a second operation method that is to first place the roll core into the housing body, and then weld the tab with the housing body.

For the second operation method, in a specific operation, it is to enabling a welding pin of a resistance welding to pass through the cavity of the roll core to contact with the tab for pressure welding. However, in a first aspect, this welding method is easy to cause the deformation of the housing body, which not only affects quality and performance of the button cell, but also affects the yield of the button cell; in a second aspect, this welding method may form a welding bump on the outer surface of the housing body, which affects the electrical connection effect and energy transfer efficiency between the button cell and electronic products; and in a third aspect, the welding pin in this welding method wears out relatively quickly, and thus it is necessary to replace the welding pin frequently and debug the welding equipment, which not only affects the production efficiency, but also increases the cost of the welding pin.

In order to solve the above technical problems, the present invention provides a button cell, a roll core of the button cell includes a first tab, and the first tab is welded to a bottom wall of a case by laser welding. As such, in a first aspect, the laser welding has no need to directly contact a laser welding equipment with the first tab, thereby avoiding the deformation of the housing body caused by the contact pressure welding, which not only is beneficial to ensuring the quality and performance of the button cell, but also beneficial to improving the yield of the button cell; in a second aspect, after the laser welding is completed, the welding mark is only formed in the welding area of the first tab, and the outer surface of the welding area of the bottom wall of the housing body is a smooth surface, thereby beneficial to ensure the electrical connection effect and energy transfer efficiency between the button cell and electronic products; and in a third aspect, the laser welding does not need to replace the welding pin, thereby not only beneficial to improving the production efficiency, but also beneficial to reducing the production cost.

In order to make purposes, technical solutions and advantages of embodiments of the present invention clearer, the technical solutions in the embodiments of the present invention would be clearly and completely described below in combination with the drawings in the embodiments of the present invention. Obviously, the described embodiments are some of the embodiments of the present invention, not all of the embodiments. Based on the embodiments of the present invention, all other embodiments obtained by those of ordinary skill in the art without creative work belong to the protection scope of the present invention.

### Embodiment 1

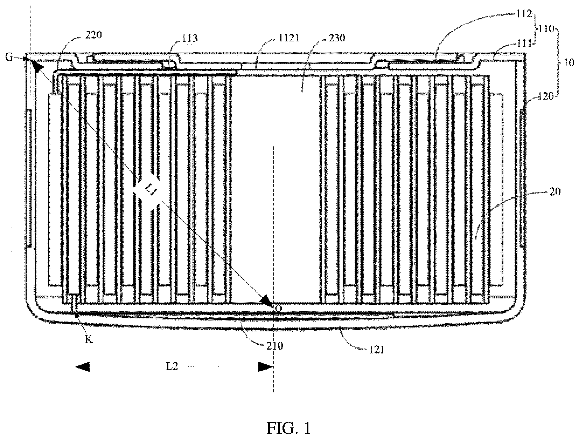

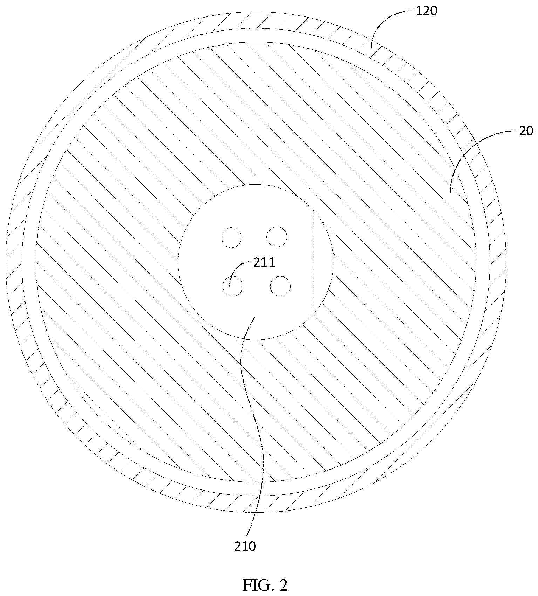

FIG. 1 is a cross-sectional view of a button cell provided by Embodiment 1 of the present invention; FIG. 2 is a top view of the button cell after removing a top cover as provided by Embodiment 1 of the present invention.

Referring to FIG. 1 and FIG. 2, this embodiment provides a button cell, the button cell includes a housing 10 and a roll core 20. Specifically, the housing 10 includes a top cover assembly 110 and a housing body 120, and the housing body 120 and the top cover assembly 110 jointly enclose an accommodating cavity for accommodating the roll core 20.

Where the top cover assembly 110 includes an upper cover 111 and a top cover 112. The upper cover 111 extends from a top of the side enclosure walls towards a direction of the central axis of the housing body 120, a center hole surrounding the central axis of the housing body 120 is provided in a center of the upper cover 111, and the top cover 112 is covered on the center hole and sealed with the upper cover 111. Specifically, the outer edge of the upper cover 111 may be connected with the housing body 120 by welding, the inner edge of the upper cover 111 is lapped to the outer edge of the top cover 112, and an insulation rubber ring 113 is sandwiched between the inner edge of the upper cover 111 and the outer edge of the top cover 112.

Further, a seam where the upper cover 111 is lapped to the top cover 112 may be coated with sealant thereby further ensuring the sealing of the top cover assembly 110.

The housing body 120 includes a bottom wall 121 and a side enclosure walls disposed along the outer edge of the bottom wall 121 and extending upward. The bottom wall 121 of the housing body 120 may protrude downward to form a convex surface. Exemplarily, the convex surface may be conical, or spherical, or in any other shape. The setting of the convex surface can increase an internal space of the button cell, which is beneficial to improving the cycle performance of the button cell.

It can be known from the above, the housing 10 includes two parts that are insulatively connected by the insulation rubber ring 113, where one part is the housing body 120 and the upper cover 111, and the other part is the top cover 112. Of course, in other cases, it may also be that the housing body 120 is one part, and the upper cover 111 and the top cover 112 are the other part.

Continue to refer to FIG. 1 to FIG. 2, the roll core 20 includes a positive sheet, a negative sheet and a diaphragm for separating the positive sheet from the negative sheet; a positive tab is provided on the positive sheet, and a negative tab is provided on the negative sheet; during the winding process, the positive sheet, the diaphragm and the negative sheet are wound in the same direction starting from a head end of the winding and finally form a wound battery, and a cavity 230 is formed in the middle of the wound battery. That is, the roll core 20 of this embodiment includes a first tab 210 and a second tab 220, where the first tab 210 is the positive tab and the second tab 220 is the negative tab; or the first tab 210 is the negative tab and the second tab 220 is the positive tab.

Where the first tab 210 and the second tab 220 are connected and conducted with the two mutually insulated parts of the housing, so that the roll core can output electric energy to outside through the housing, or receive electric energy inputted from outside through the housing. For example, the first tab 210 is electrically connected to the housing body 120, and the second tab 220 is electrically connected to the top cover 112 having an opposite electrical polarity to the housing body 120.

Exemplarily, when the upper cover 111 and the top cover 112 have opposite electrical polarities, the second tab 220 may be connected with the top cover 112 in the top cover assembly 110 by welding; when the upper cover 111 and the top cover 112 have the same electrical polarity, the second tab 220 may be welded with any one of the top cover 112 or the upper cover 111. Of course, the second tab 220 may be connected with the top cover 112 or the upper cover 111 by other means, as long as the electrical conductivity after connection can be ensured.

The first tab 210 is welded to the bottom wall 121 of the housing body 120 by laser welding, and there is a welding mark 211 in the welding area of the first tab 210, and the welding mark 211 is located in a part where the bottom wall 121 overlaps with the cavity 230 of the roll core 20, and the outer surface of the welding area of the bottom wall 121 of the housing body is a smooth surface. It should be noted that the outer surface of the welding area of the bottom wall of the housing body being a smooth surface means that after the first tab 210 is welded with the bottom wall 121 of the housing body, the welding mark 211 is only formed on a side of the first tab 210 facing away from the bottom wall 121 of the housing body, that is, the welding mark 211 may only be observed from inside of the housing body 120, and the welding mark does not extend to a side of the bottom wall of the housing body facing away from the first tab, that is, there is no welding mark on the outer surface of the bottom wall of the housing body. Therefore, the outer surface of the welding area of the bottom wall of the housing body still maintains the outer surface of the bottom wall of the housing body to be in a state before welding, that is, a state where the surface is smooth.

In a specific implementation, the roll core 20 is placed into the housing body 120, so that the first tab 210 is attached to the bottom wall 121 of the housing body, and the laser emitted by the laser welding equipment passes through the cavity 230 of the roll core 20 to weld the first tab 210 to the bottom wall 121 of the housing body so that the welding area of the first tab 210 has a welding mark 211, and an outer surface of the welding area of the bottom wall 121 of the housing body is a smooth surface.

Optionally, a distance L1 from a top of the side enclosure wall of the housing body 120 to the welding mark 211 is greater than a length L2 from an end point of the first tab 210 out of the roll core 20 to the tab of the welding mark 211. Exemplarily, In FIG. 1, the top of the side enclosure wall is indicated by G, the end point of the first tab 210 out of the roll core 20 is indicated by K, and the welding mark 211 is indicated by O. FIG. 1 shows that the first tab 210 is provided outside the roll core 20, so that the end point K of the first tab 210 out of the roll core 20 is also located outside the roll core 20.

The button cell of this embodiment includes the housing 10 and the roll core 20, the housing 10 includes the housing body 120 and the top cover assembly, and the housing body 120 and the top cover assembly jointly enclose the accommodating cavity for accommodating the roll core 20, the roll core 20 can output electric energy to outside through the housing 10 or receive electric energy inputted from outside through the housing 10. The roll core 20 includes the first tab 210, and the first tab 210 is welded to the bottom wall 121 of the housing body 120 by laser welding. On one hand, compared with a resistance welding that involves contact pressure welding, laser welding does not need to directly contact the laser welding equipment with the first tab, and only needs to irradiate the laser emitted by the laser welding equipment onto the first tab, to achieve the purpose of welding the first tab with the bottom wall of the housing body, so that the deformation of the housing body caused by the contact pressure welding can be avoided, which is not only beneficial to ensuring the quality and performance of the button cell, but also beneficial to improving the yield of the button cell.

On the other hand, after the laser welding is completed, the welding mark 211 is only formed on the welding area of the first tab 210, while the outer surface of the welding area of the bottom wall 121 of the housing body 120 is a smooth surface, that is, after the button cell is assembled into the electronic product, the smooth surface of the housing body of the button cell can maintain a good contact with a conductive area of the electronic product, which is beneficial to ensuring the electrical connection effect between the button cell and the electronic product, and thus beneficial to improving the energy transfer efficiency between the button cell and the electronic product.

In a possible implementation, the welding mark 211 formed in the welding region of the first tab 210 after the laser welding is completed may include a spot-like welding mark. Exemplarily, the laser welding equipment may emit laser in the manner of pulse spotting to weld the first tab 210 to the bottom wall 121 of the housing body, and the welding mark 211 formed in the manner of pulse spotting is a spot-like welding mark.

Specifically, an edge of the spot-like welding mark in this embodiment may be circular.

Further, a diameter of the circular spot-like welding mark is not less than 50 µm. Exemplarily, a diameter of the circular spot-like welding mark may be 50 µm, 60 µm,70 µm,80 µm or 100 µm, etc.; or the diameter of the circular spot-like welding mark may be set to be any value not less than 50 µm according to actual needs. By setting the diameter of the circular spot-like welding mark to be not less than 50 µm, it is beneficial to ensuring the better welding effect between the first tab and the bottom wall of the housing body, which avoids affecting the welding effect between the tab and the bottom wall of the housing body due to too small diameter of the circular spot-like welding mark.

The number of the spot-like welding mark in this embodiment is not less than 2. Exemplarily, the number of the spot-like welding mark may be 2, 3, 4, 5, 6 or 8, etc.; or the number of the spot-like welding mark may be set to any value not less than 2 according to actual needs.

In another possible implementation, the welding mark 211 formed in the welding area of the first tab 210 after the laser welding is completed may include a linear welding mark. Exemplarily, laser emitted by the laser welding equipment may move on the first tab 210 along a linear path to weld the first tab 210 to the bottom wall 121 of the housing body 120, the welding mark formed by the laser linearly moving and welding on the first tab 210 is the linear welding mark. Where the linear welding mark may be a straight line, a broken line, a curve line or a spiral line, etc.

### Embodiment 2

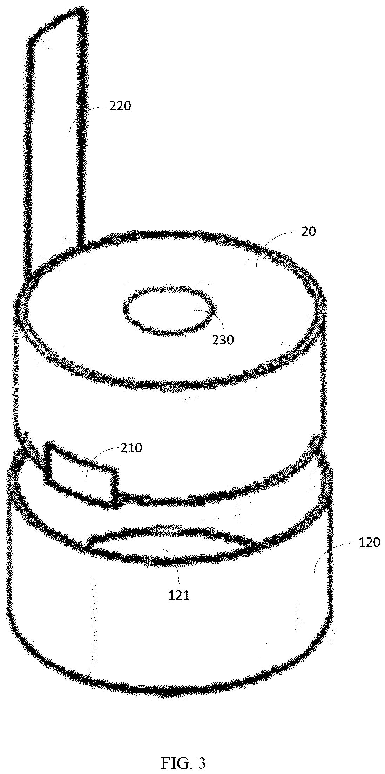

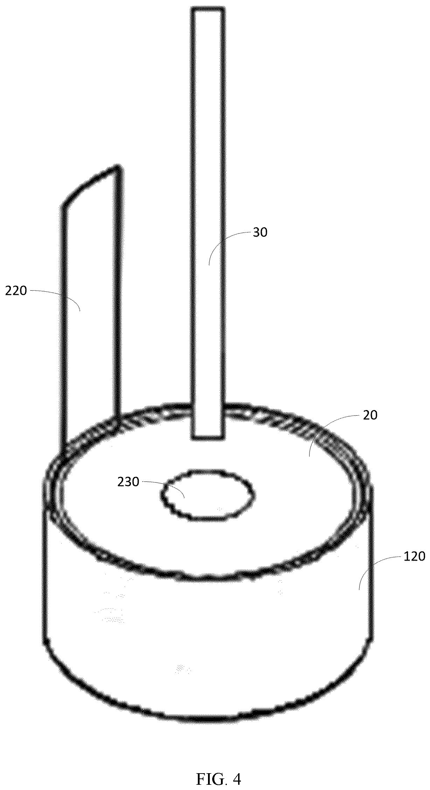

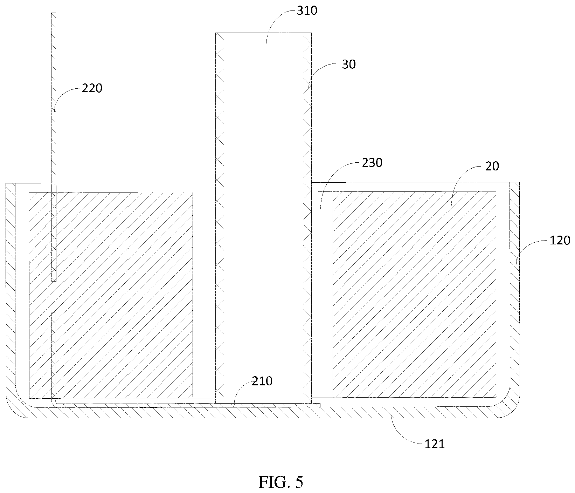

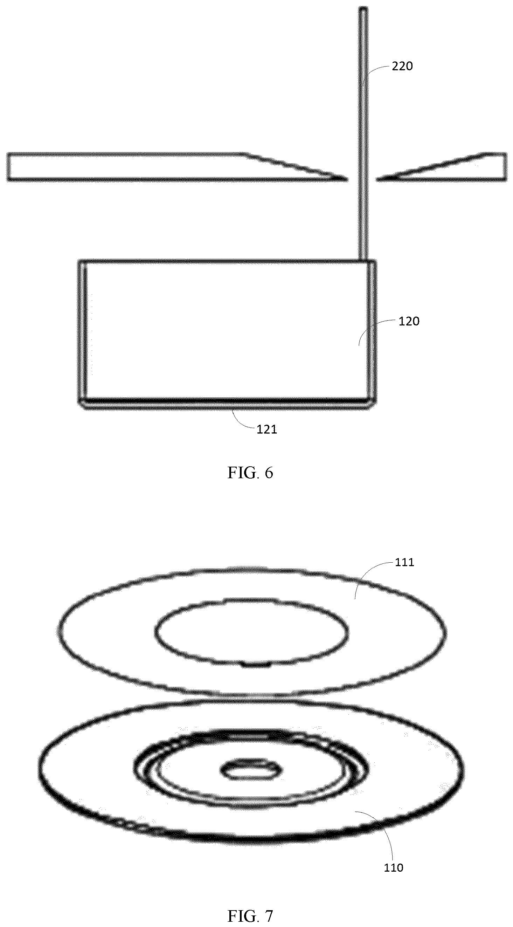

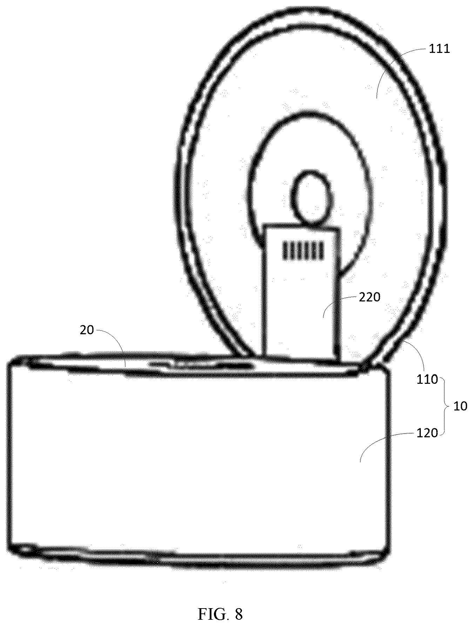

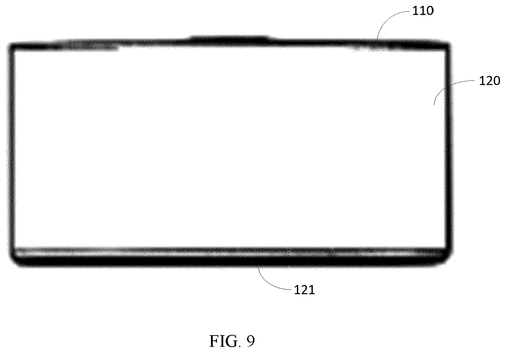

FIG. 3 is a schematic diagram of a process of loading a roll core into a housing body as provided by Embodiment 2 of the present invention; FIG. 4 is a schematic diagram of a process of a hollow pipe extending into a cavity of the roll core as provided by Embodiment 2 of the present invention; FIG. 5 is a cross-sectional view of the hollow pipe located in the cavity of the roll core as provided by Embodiment 2 of the present invention; FIG. 6 is a schematic structural diagram of cutting a second tab as provided by Embodiment 2 of the present invention; FIG. 7 is a schematic diagram of a process of gluing the top cover as provided by Embodiment 2 of the present invention; FIG. 8 is a schematic structural diagram after welding the second tab to the top cover as provided by Embodiment 2 of the present invention; FIG. 9 is a schematic structural diagram after the top cover welded to the housing body as provided by Embodiment 2 of the present invention.

As shown in FIG. 3 to FIG. 9, this embodiment provides a preparation method of a button cell, and the preparation method of the button cell includes:
S100: providing a housing. As shown in FIG. 3, the housing 10 includes a housing body 120 and a top cover assembly 110, where the housing body 120 includes a bottom wall 121 and a side enclosure wall provided along an outer edge of the bottom wall 121 and extending upward, the top cover assembly 110 includes an upper cover 111 and a top cover 112, the upper cover 111 is from a top of the side enclosure wall to a direction of a central axis of the housing body and a center hole surrounding the central axis is provided in the center of the upper cover 111, and the top cover 112 is covered on the center hole of the upper cover 111 and is sealed with the upper cover 111.
S200: providing a roll core. As shown in FIG. 3, the roll core 20 includes a positive sheet and a negative sheet, and a cavity 230 at least partially overlapping with the center hole of the upper cover 111 is formed in a center of the roll core, and the positive sheet or negative sheet is provided with the first tab 210.
S300: placing the roll core 20 into a housing body 120, and causing the first tab 210 of the roll core 20 to extend toward the bottom wall 121 of the housing body 120 and attached to the bottom wall 121 of the housing body 120, see FIG. 3. Specifically, an outer diameter of the roll core 20 may be 0.2mm to 0.4mm smaller than an inner diameter of the housing body. In this way, on one hand, it is convenient to place the roll core into the housing body; on the other hand, reserving a space for expansion of the roll core to avoid excessive internal pressure of the button cell, which is beneficial to improving the safety performance of the button cell.
S400: welding the first tab 210 to the bottom wall 121 using laser welding equipment, where when welding, laser of the laser welding equipment passes through the cavity 230 of the roll core 20. Exemplarily, the laser welding equipment may weld the first tab 210 to the bottom wall 121 of the housing body in a manner of pulse spotting to form a spot-like welding mark 211 in a welding area of the first tab 210; or the laser welding equipment may weld the first tab 210 to the bottom wall 121 of the housing body in a manner of continuous welding to form a linear welding mark or welding marks in other shape in the welding area of the first tab.

Optionally, a distance L1 from the top of the side enclosure wall of the housing body 120 to the welding mark 211 is greater than a length L2 from an end point of the first tab 210 out of the roll core 20 to the tab of the welding mark 211. Exemplarily, in FIG. 1, the top of the side enclosure wall is indicated by G, the end point of the first tab 210 out of the roll core 20 is indicated by K, and the welding mark 211 is indicated by O. FIG. 1 shows that the first tab 210 is provided outside the roll core 20, so that the end point K of the first tab 210 out of the roll core 20 is correspondingly located outside the roll core 20.

S500: welding a second tab 220 of the roll core 20 to an inner side of the top cover assembly 110, as shown in FIG. 8. For example e, when the upper cover 111 and the top cover 112 have opposite electrical polarities, the second tab 220 is welded to an inner side of the top cover 112; when the upper cover 111 and the top cover 112 have the same electrical polarity, the second tab 220 is welded to the inner side of any one of the top cover 112 or the upper cover 111.

S600: covering the top cover assembly 110 on the top of the side enclosure wall of the housing body 120 and sealing it with the side enclosure wall to form the button cell, as shown in FIG. 9. For example, when the upper cover 111 and the top cover 112 have opposite electrical polarities, the upper cover 111 is welded with the side enclosure wall; when the upper cover 111 and the top cover 112 have the same electrical polarity, the upper cover 111 and the side enclosure wall are connected in an insulating and sealing manner by a sealing rubber ring.

The preparation method of the button cell of this embodiment welds the first tab 210 to the bottom wall 121 of the housing body 120 by using the laser welding equipment. On one hand, compared with a resistance welding that involves contact pressure welding, laser welding does not need to directly contact the laser welding equipment with the first tab, and only needs to irradiate the laser emitted by the laser welding equipment onto the first tab, to achieve the purpose of welding the first tab with the bottom wall of the housing body, so that the deformation of the housing body caused by the contact pressure welding can be avoided, which is not only beneficial to ensuring the quality and performance of the button cell, but also beneficial to improving the yield of the button cell.

On the other hand, after the laser welding is completed, the welding mark is only formed on the welding area of the first tab, while the outer surface of the welding area of the bottom wall of the housing body is a smooth surface, that is, after the button cell is assembled into the electronic product, the smooth surface of the housing body of the button cell can maintain a good contact with a conductive area of the electronic product, which is beneficial to ensuring the electrical connection effect between the button cell and the electronic product, and thus beneficial to improving the energy transfer efficiency between the button cell and the electronic product.

Where S400: welding the first tab 210 to the bottom wall 121 using the laser welding equipment includes:
S401: extending one end of a hollow pipe 30 into the cavity 230 of the roll core 20, and abutting against the first tab 210, with the first tab 210 being at least partly exposed to the inner cavity 310 of the hollow pipe 30, as shown in FIG. 4 and FIG. 5.
S402: causing the laser emitted by the laser welding equipment to pass through the inner cavity 310 of the hollow pipe 30, and welding the first tab 210 to the bottom wall 121 of the housing body.

On one hand, the hollow pipe 30 of this embodiment can be used to press the first tab 210 against the bottom wall 121 of the housing body 120 to prevent the quality and performance of the button cell from being affected due to a pseudo welding caused by insufficient attachment between the first tab 210 and the bottom wall 121 of the housing body; on the other hand, the hollow pipe 30 can separate the laser from the roll core 20, and guide the laser, which can not only prevent the laser from accidentally damaging the roll core 20, but also prevent the laser from being irradiated on other position outside the welding area.

Specifically, a height of the hollow pipe 30 is greater than a height of the roll core 20, so as to ensure that the hollow pipe 30 separates the roll core 20 from the laser and to avoid the laser to accidentally damage the roll core 20, which is not only beneficial to ensuring the quality and performance of the button cell, but also beneficial to improving the yield of the button cell.

Further, the height of the hollow pipe 30 is greater than 5mm. Exemplarily, the height of the hollow pipe 30 may be 5mm, 6mm, 7mm, 8mm, 9mm, or 10mm, etc.; or the height of the hollow pipe 30 may be any value greater than 5mm according to actual needs.

In an implementation, the outer diameter of the hollow pipe 30 is between 1 mm and 3 mm. Exemplarily, the outer diameter of the hollow pipe 30 may be 1 mm, 1.5 mm, 2 mm, 2.5 mm or 3 mm, etc.; or the outer diameter of hollow pipe 30 may be set to any value between 1mm and 3mm according to actual needs.

In other implementations, the outer diameter of the hollow pipe 30 may be set to any value less than 1 mm or greater than 3 mm according to actual needs.

In an implementation, the inner diameter of the hollow pipe 30 is between 0.5 mm and 2.8 mm. Exemplarily, the inner diameter of the hollow pipe 30 may be 0.5 mm, 1 mm, 1.5 mm, 2 mm or 2.8 mm, etc.; or the inner diameter of the hollow pipe 30 may be set to any value between 0.5 mm and 2.8 mm according to actual needs.

In other implementations, the inner diameter of the hollow pipe 30 may be set to any value less than 0.5 mm or greater than 2.8 mm according to actual needs.

In an implementation, an wall thickness of the hollow pipe 30 is between 0.05 mm and 0.5 mm. Exemplarily, the wall thickness of the hollow pipe 30 may be 0.05 mm, 0.15 mm, 0.3 mm, 0.4 mm or 0.5 mm, etc.; or the wall thickness of the hollow pipe 30 may be set to any value between 0.05 mm and 0.5 mm according to actual needs.

In other implementations, the wall thickness of the hollow pipe 30 may be set to any value less than 0.05 mm or greater than 0.5 mm according to actual needs.

In an implementation, the hollow pipe 30 may be a metal hollow pipe. Exemplarily, the hollow pipe may be a stainless steel hollow pipe, a copper hollow pipe, an iron hollow pipe or an aluminum hollow pipe, etc.

In other implementations, the hollow pipe 30 may be made of other high temperature resistant non-metallic materials, such as ceramic, etc.

Where S500: welding the second tab 220 of the roll core to the inner side of the top cover assembly includes:
S501: cutting the second tab 220 to a preset length, as shown in FIG. 6. Where the preset length of the second tab 220 is such that the welding connection between the second tab 220 and the top cover assembly can be ensured without shielding a length of an injection hole 1121, that is, in the process of cutting the second tab 220, the length of the second tab 220 needs to be controlled to avoid that the length of the second tab 220 is too long to cover the injection hole 1121, or the length of the second tab 220 is too short to affect the welding effect between the second tab 220 and the top cover assembly.
S502: attaching an insulation rubber ring 113 to a side of the top cover assembly 110 facing the roll core 20, where the insulation rubber ring 113 is coaxially arranged with the top cover assembly, as shown in FIG. 7. The insulation rubber ring 113 is used to insulate the roll core 20 from the top cover assembly 110 to ensure the performance of the button cell and avoid short circuit inside the button cell; the coaxial arrangement between the insulation rubber ring 113 and the top cover assembly is beneficial to ensuring that the insulation rubber ring 113 is located between the top surface of the roll core 20 and the top cover assembly 110, so as to avoid the short circuit caused by the deviation of the insulation rubber ring 113.
S503: welding the second tab 220 to the inner side of the top cover assembly 110, as shown in FIG. 8. In an implementation, the second tab may be welded to the inner side of the top cover assembly 110 by using a laser welding method, which, on one hand, is beneficial to avoiding the deformation of the top cover, and on the other hand, can avoid the formation of the welding mark on the outer surface of the top cover assembly 110; in another implementation, the second tab may be welded to the inner side of the top cover assembly 110 by a welding method such as resistance welding etc., which is not be repeatedly described here.

Further, the second tab may be welded to the inner side of the top cover assembly 110 by laser pulse spotting, or the second tab may be welded to the inner side of the top cover assembly 110 by laser continuous welding.

Where S600: covering the top cover assembly 110 on the top of the side enclosure wall of the housing body 120 and sealing it with the side enclosure wall of the housing body 120 to form the button cell, includes:
S601: covering the top cover 112 at the center hole of the upper cover 111 and insulatively sealing it with the upper cover 111. Specifically, a side of the top cover 112 welded with the second tab 220 is downward covered at the center hole of the upper cover 111.
S602: covering the upper cover 111 on the top of the side enclosure wall of the housing body 120 and welding it with the side enclosure wall. Specifically, the welding method between the upper cover 111 and the side enclosure wall of the housing body 120 may be resistance welding, laser welding, or other welding method. For example, when welding, the upper cover 111 and the side enclosure wall of the housing body 120 may be welded together by side welding or rounded angle pulse welding. In addition, after welding, the sealing of the welding can be tested to ensure the sealing of the button cell, which is beneficial to ensuring the quality and performance of the button cell.

### Embodiment 3

This embodiment provides an electronic product including a button cell.

The button cell in this embodiment has the same structure as that provided in Embodiment 1, and can bring the same or similar technical effects, and thus details would not be repeated here, and can refer to the description of the above embodiments.

In the description of the present invention, it should be understood that an orientation or a position relationship indicated by terms "top", "bottom", "upper", "lower" (if any) etc. is based on an orientation or a positional relationship shown in the drawings, and is intended only for convenience of describing the present invention and simplifying the description, rather than indicating or implying that the referred device or element must have a specific orientation, or be constructed and operated in a specific orientation, and therefore it should not be understood as a limitation to the present invention.

In the description of the present invention, it should be noted that, unless otherwise expressly specified and limited, terms "install", "connecting" and "connected" should be understood in a broad sense, for example, it may be a fixed connection, a detachable connection, or an integral connection; it can be a mechanical connection or an electrical connection; or it can be a direct connection, an indirect connection through an intermediate medium, or an internal communication of two elements. For those of ordinary skill in the art, the specific meanings of the above terms in the present invention can be understood through specific situations.

Terms "first" and "second" in the description and claims of the present application and the above brief description of the drawings are used to distinguish similar objects, and are not necessarily used to describe a specific order or sequence. It should be understood that data thus used in such manner may be interchanged in appropriate cases, such that the embodiments of the present application described herein can, for example, be practiced in an order other than those illustrated or described herein.

Finally, it should be noted that the above embodiments are only used to illustrate the technical solutions of the present application, but not to limit them; although the present invention is illustrated in detail with reference to the above embodiments, those of ordinary skill in the art should understand that the technical solutions described in the above embodiments may still be modified or some or all of the technical features therein may be equivalently replaced; and these modifications or replacements do not make the essence of the corresponding technical solutions deviate from the scope of the technical solutions of the embodiments of the present application.

## Claims

1. A button cell, comprising a housing and a roll core;
the housing comprises a housing body and a top cover assembly, wherein the housing body comprises a bottom wall and a side enclosure wall provided along an outer edge of the bottom wall and extending upward, the top cover assembly is covered on a top of the side enclosure wall and sealed with the side enclosure wall, the housing body and the top cover assembly jointly enclose an accommodating cavity for accommodating the roll core;
the roll core comprises a positive sheet and a negative sheet, a cavity is formed in a center of the roll core, the positive sheet or the negative sheet is provided with a first tab extending toward a direction of the bottom wall, and the first tab is welded to the bottom wall of the housing body by laser welding; and
a welding area of the first tab has a welding mark, and the welding mark is located in a portion where the bottom wall overlaps with the cavity, and after laser welds the first tab and the bottom wall together, the welding mark is formed only on a side of the first tab facing away from the bottom wall.

2. The button cell according to claim 1, wherein a distance from the top of the side enclosure wall to the welding mark is greater than a length from an end point of the first tab out of the roll core to the tab of the welding mark.

3. The button cell according to claim 2, wherein the welding mark comprises a spot-like welding mark, an edge of the spot-like welding mark is circular; and/or
a diameter of the spot-like welding mark is not less than 50 µm; and/or
the number of the spot-like welding mark is not less than 2.

4. The button cell according to claim 1, wherein the top cover assembly comprises an upper cover and a top cover, the upper cover is welded with the side enclosure wall and extends from the top of the side enclosure wall towards a direction of a central axis of the housing body, the upper cover is provided with a center hole surrounding the central axis of the housing body, and the top cover is covered at the center hole and is insulatively sealed with the upper cover.

5. A preparation method of a button cell comprising:
providing a housing, wherein the housing comprises a housing body and a top cover assembly, the housing body comprises a bottom wall and a side enclosure wall provided along an outer edge of the bottom wall and extending upward;
providing a roll core, wherein the roll core comprises a positive sheet and a negative sheet provided in a laminated manner, a cavity is formed in a center of the roll core, and the positive sheet or the negative sheet is provided with a first tab;
placing the roll core into the housing body, making the first tab of the roll core extend toward a direction of the bottom wall of the housing body and attached to the bottom wall;
welding the first tab to the bottom wall by a laser welding equipment, wherein laser of the laser welding equipment passes through the cavity;
welding a second tab of the roll core to an inner side of the top cover assembly; and
covering the top cover assembly on a top of the side enclosure wall and sealing it with the side enclosure wall.

6. The preparation method of a button cell according to claim 5, wherein welding the first tab to the bottom wall by the laser welding equipment comprises:
inserting a hollow pipe into the cavity of the roll core, and pressing the first tab against the bottom wall by the hollow pipe, with the first tab being at least partly exposed to an inner cavity of the hollow pipe, and
causing laser emitted by the laser welding equipment to pass through the inner cavity of the hollow pipe, and weld the first tab to the bottom wall of the housing body.

7. The preparation method of a button cell according to claim 6, wherein the laser welding equipment welds the first tab to the bottom wall of the housing body by pulse spotting.

8. The preparation method of a button cell according to claim 6, wherein welding the second tab of the roll core to the inner side of the top cover assembly comprises:
cutting the second tab to a preset length;
attaching an insulation rubber ring to a side of the top cover assembly facing the roll core, with the insulation rubber ring being coaxially arranged with the top cover assembly; and
welding the second tab to a portion of the top cover assembly located in an inner side of the insulation rubber ring.

9. The preparation method of a button cell according to claim 8, wherein the second tab is welded to the top cover by means of laser pulse spotting.

10. The preparation method of a button cell according to claim 8 or 9, wherein the top cover assembly comprises an upper cover and a top cover, and a center hole is provided in a center of the upper cover;
covering the top cover assembly on the top of the side enclosure wall and sealing it with the side enclosure wall comprises:
covering the top cover on the center hole of the upper cover and insulatively sealing it with the upper cover; and
covering the upper cover on the top of the side enclosure wall and welding it with the side enclosure wall.
